# EUROPÄISCHE PATENTANMELDUNG

(11) **EP 2 607 813 A1**
(43) Veröffentlichungstag der Anmeldung: **26.06.2013**
(21) Anmeldenummer: 12198325.8
(22) Anmeldetag: 20.12.2012
(51) Int. Cl.: F24J 2/04, F24J 2/52, E04B 2/88, E04F 13/08, E06B 3/54

(54) **Befestigungsanordnung für flächige Bauteile, insbesondere für Glaselemente oder Solarmodule**

(30) Priorität: 21.12.2011 DE 102011056785
(71) Anmelder: Uhlig, Tilo, 04916 Herzberg (DE)
(72) Erfinder: Uhlig, Tilo, Dr., 04916 Herzberg (DE); Uhlig, Jens, Dipl-Ing., 04916 Herzberg (DE)
(74) Vertreter: Sperling, Thomas

(57) **Zusammenfassung**

Die Erfindung betrifft eine Befestigungsanordnung für flächige Bauteile (1), insbesondere für Glaselemente oder Solarmodule, an einer senkrechten oder geneigten Wand (7), einer Fassade oder einem Dach, welche dadurch gekennzeichnet ist, dass ein oberes Tragprofil (3) und ein unteres Tragprofil (4) in vertikaler Richtung zueinander beabstandet an einer Wand (7) befestigt angeordnet sind und dass eine Befestigungsschiene (2) an dem flächigen Bauteil (1) befestigt ist, wobei die Befestigungsschiene (2) in ein Tragprofil (3, 4) formschlüssig einhängbar und das flächige Bauteil (1) mit dem anderen Tragprofil (4, 3) stoffschlüssig verklebbar ausgebildet ist.

## Beschreibung

Die Erfindung betrifft eine Befestigungsanordnung für flächige Bauteile, insbesondere für Glaselemente oder Solarmodule, an einer senkrechten oder geneigten Wand, einer Fassade oder einem Dach.

Unter flächigen Bauteilen im Sinne der Erfindung sind beispielsweise Fassadenelemente oder Solarmodule, die auch als Solarpaneele bezeichnet werden, zu verstehen, die an senkrechten oder geneigten Wänden befestigt werden.

Zu den Anwendungsgebieten für die gattungsgemäße Befestigungsanordnung zählt beispielsweise auch die Befestigung von flächigen Bauteilen an Schallschutzwänden, auf Dächern von Gebäuden, Hallen oder Carports sowie die Verkleidungen von Loggias, Balkonen und Ähnlichem.

Einzelne Fassadenelemente aus Glas oder Solarmodule werden überwiegend mit mechanischen Befestigungselementen zu größeren zusammenhängenden Flächen zusammengefügt. Die einzelnen Elemente werden dabei häufig angebohrt und über die Bohrung formschlüssig befestigt oder kraftschlüssig geklemmt.

Sehr verbreitet ist auch die Anbringung von in Profilen angeordneten Glaselementen oder die Anbringung über Profilecken, die mit dem Glaselement verklebt sind und so zu Flächen zusammengefügt werden.

Nachteilig ist, dass der thermische Ausgleich unterschiedlicher Materialien durch elastische Materialien hergestellt werden muss.

Nach der DE 100 08 868 A1 wird beispielsweise eine Verbindungsbrücke zur Verbindung von Glaswandsegmenten, die mit Solarpaneelen ausgestattet sind, offenbart, wobei die Verbindungsbrücke mittels eines zentralen Stützlagers an einer Unterkonstruktion oder dergleichen angeschlossen ist. Die Verbindungsbrücke weist wenigstens einen radial zum Stützlager verlaufenden Tragarm auf, an dessen dem Stützlager abgewandten freien Ende ein Anschlussgelenk für den Anschluss eines das Glaswandsegment oder Plattensegment einspannenden Klemmbeschlages angeordnet ist.

Nachteilig an diesem Stand der Technik ist, dass die Verbindungsbrücke aus einer Vielzahl von verschiedenen Teilen aufwendig hergestellt wird und kompliziert zu installieren sind und dass die flächigen Bauteile in ihren Ecken mit einer Bohrung versehen sein müssen.

Aus der DE 103 37 410 B3 geht ein Profil zur Halterung und Befestigung von Flächenkörpern, insbesondere von Solarpaneelen, hervor, welches über eine spezielle geometrische Gestaltung die Halterung der flächigen Bauteile bewirkt. Das Halteprofil besitzt eine Auflagefläche für die Solarpaneele in Form eines ungeteilten Mittelabschnittes einer Deckfläche eines zwischen U-förmigen Abschnitten angeordneten Absatzes. Der Absatz weist die Form eines Hohlprofils mit mindestens einer Kammer zur Aufnahme von Befestigungselementen auf. Weiterhin kann mindestens ein Zusatzprofil an das Halteprofil angefügt werden, wobei eine Oberseite des Zusatzprofils zusammen mit der Deckfläche des Absatzes Komponenten einer vergrößerten Auflagefläche bilden.

Nachteilig an dieser Lösung ist wiederum die relativ komplizierte Geometrie und Konstruktion des Halteprofils, woraus sich insgesamt ein hoher Aufwand in der Herstellung und an Material ergibt, was zwangsläufig hohe Kosten nach sich zieht.

Sämtlichen Lösungen nach dem Stand der Technik ist der Nachteil zu eigen, dass ein hoher Aufwand erforderlich ist, um an den zu bearbeiteten Rohbauflächen einen dreidimensionalen Ausgleich bei der Installation der Flächen aus den flächigen Bauteilen zu erreichen.

Die Montage gestaltet sich somit als sehr aufwendig und die Justierung der Glaselemente ist schwierig beziehungsweise sogar unmöglich.

Hinzu tritt, dass Schmutzablagerungen an den mechanischen Elementen an den Rändern oder Ecken der Glaselemente auftreten und nachteilig ist weiterhin, dass bei punktuellen Befestigungsstellen Spannungen im flächigen Bauteil entstehen, die bis zur Zerstörung durch Rissbildung führen können.

Es ist Aufgabe der Erfindung, eine Befestigungsanordnung für flächige Bauteile zur Verfügung zu stellen, die einfach handhabbar ist und bei der ein dreidimensionaler Ausgleich der Fläche eine zügige Montage der flächigen Bauteile ermöglicht.

Weiterhin ist es Ziel der Erfindung, eine Fläche ohne mechanische Erhöhungen und Kanten zu erzielen, sodass Ablagerungen von Schmutz vermieden werden können. Gleichfalls Ziel der Erfindung ist, die Langzeitstabilität der aus den flächigen Bauteilen zusammengesetzten Flächen zu erhöhen.

Die Aufgabe wird durch die Merkmale einer Befestigungsanordnung gemäß Patentanspruch 1 gelöst. Weiterbildungen sind in den abhängigen Patentansprüchen angegeben.

Insbesondere wird die Aufgabe durch eine Befestigungsanordnung für flächige Bauteile, beispielsweise für Glaselemente oder Solarmodule, an einer senkrechten oder geneigten Wand, einer Fassade oder einem Dach, dadurch gelöst, dass ein oberes Tragprofil und ein unteres Tragprofil in vertikaler Richtung zueinander beabstandet an der Wand befestigt angeordnet sind. Weiterhin ist eine Befestigungsschiene an dem flächigen Bauteil befestigt, wobei die Befestigungsschiene in ein Tragprofil formschlüssig einhängbar ist. Das flächige Bauteil wird nach dem Einhängen in ein Tragprofil an das andere Tragprofil herangeschwenkt und mit diesem stoffschlüssig verklebt.

Nach einer besonders vorteilhaften Ausgestaltung der Erfindung ist die Befestigungsschiene in das obere Tragprofil einhängbar ausgebildet, wobei der Kleber beziehungsweise der Klebstoff auf dem unteren Tragprofil angeordnet ist.

Nach einer bevorzugten Ausgestaltung der Erfindung sind das obere und/oder das untere Tragprofil über ein Justierelement in horizontaler Richtung an der Wand positionierbar angeordnet. Es hat sich als zweckmäßig herausgestellt, dass das obere und das untere Tragprofil an der Wand mittels einer Schraube über das Justierelement befestigt und positioniert wird.

Bevorzugt ist das obere Tragprofil als Strangprofil mit einem fünfeckigen Querschnitt mit einer im Querschnitt nach oben auskragenden Einhängewulst ausgestaltet. Korrespondierend zu dieser Einhängewulst ist die Befestigungsschiene ausgestaltet, sodass diese formschlüssig mit der Einhängewulst korrespondierend in das obere Tragprofil eingehangen werden kann und bereits während der Montage vor der endgültigen Fixierung des Bauteils das Gewicht weitgehend aufnehmen kann. Die abschließende Positionierung kann dann vom Monteur mit relativ geringem Kraftaufwand durchgeführt werden, bevor das flächige Bauteil am unteren Tragprofil stoffschlüssig mittels Kleber fixiert wird.

Das untere Tragprofil weist bevorzugt einen einfachen viereckigen Querschnitt auf, das in seinen Abmessungen in der Tiefe zwischen Wand und flächigem Bauteil im Wesentlichen denen des oberen Tragprofils entspricht.

Alternativ zur unterschiedlichen Ausgestaltung von oberem und unterem Tragprofil ist zur Vereinfachung bei Montage und Logistik auch das untere Tragprofil wie das obere Tragprofil ausgestaltet. Die Einhängewulst des oberen Tragprofils hat zwar keine unmittelbare Funktion, ist jedoch auch nicht störend oder nachteilig. Die für die Klebeverbindung zur Verfügung stehende Fläche zur Befestigung des Solarmoduls am unteren Tragprofil wird sogar noch vergrößert. Zudem kann, bei entsprechender Positionierung der Befestigungsschiene, der Einbau der Solarmodule auch durch Einhängen der Module in die unteren Tragprofile und Heranschwenken der Module an die oberen Tragprofile erfolgen. Diese Vorgehensweise könnte beim liegenden Einbau von Solarmodulen angewandt werden.

Weiterhin als vorteilhaft hat sich erwiesen, dass an den Tragprofilen zusätzliche Distanzelemente vorgesehen sind, welche die Positionierung des in ein Tragprofil eingehängten flächigen Bauteils in Bezug auf die senkrechte Lage korrigierbar machen. Eine zusätzliche Funktion der Distanzelemente besteht darin, dass diese die minimale Dicke der zumeist unmittelbar benachbart ausgeführten Klebstoffschicht sicherstellen. Auf diese Weise wird erreicht, dass die minimale Dicke der Klebstoffschicht im ausgehärteten Zustand festgelegt ist und dass deshalb die für den Dehnungsausgleich erforderlichen flexiblen Eigenschaften der Klebstoffschicht sichergestellt werden können.

Als Klebstoffe werden bevorzugt dauerelastische Kompaktkleber eingesetzt. Bei der Verwendung von Silikon als Klebstoff beträgt die Dicke der durch die Distanzelemente festgelegten Klebstoffschicht zirka 2 bis 4 mm.

Nach einer besonders vorteilhaften Ausgestaltung der Erfindung ist das untere Tragprofil mit einem langsam abbindenden Klebstoff zur stoffschlüssigen Verbindung mit dem flächigen Bauteil beschichtet.

Die Befestigungsschiene ist bevorzugt mittels einer Klebeverbindung mit dem flächigen Bauteil verbunden. Es hat sich als vorteilhaft erwiesen, die Befestigungsschiene kürzer als die Breite des flächigen Bauteils auszuführen.

Weiterhin vorteilhaft ist, wenn das obere oder untere Tragprofil horizontal an der Wand befestigt und mit Durchbrüchen für die Ableitung von Regenwasser ausgebildet ist, sodass sich dieses nicht vor den horizontal angebrachten Profilen staut, sondern in gewissen Abständen durch diese hindurch ablaufen kann.

Die Konzeption der Erfindung besteht zusammengefasst darin, dass die flächigen Bauteile, insbesondere die Glaselemente oder Solarglaselemente an Fassaden, Dächern oder ähnlichen Objekten aus unterschiedlichem Material, wie Mauerwerk, Betonelemente, Stahlbauelemente, Blech- oder Kunststoffplatten, Dachsteinen, Holztragwerken und Ähnliches effizient über horizontal angeordnete und vertikal zueinander beabstandete Tragprofile befestigt werden können. Die erfindungsgemäßen Tragprofile werden an gemäß den gesetzlichen Erfordernissen zugelassenen Befestigungselementen an der Wand, beziehungsweise der rohen Fassade, dem Dach oder ähnlichen Objekten befestigt und dreidimensional ausgerichtet.

Das Prinzip der Verbindung besteht darin, dass ein Tragprofil formschlüssig korrespondierend mit einer Befestigungsschiene ausgebildet ist, sodass die Befestigungsschiene mit dem Glaselement in dieses Tragprofil eingehängt werden kann. Diese Verbindung ist zunächst nicht in jeder Lage fixiert und das flächige Bauteil kann noch ausgerichtet werden. Die Verbindung zwischen dem Glaselement und dem Tragprofil wird durch eine Befestigungsschiene hergestellt, die auf das Glaselement, beziehungsweise das Solarglaselement, geeignet aufgeklebt ist. Wie erwähnt ist die Befestigungsschiene in ihrer Form an das Tragprofil angepasst und beispielsweise in vertikaler und horizontaler Richtung fixiert, sodass als Freiheitsgrad der Bewegung des flächigen Bauteils ein Einschwenken des flächigen Bauteils möglich ist.

Nach dem Ausrichten wird das eingehängte Glaselement auf das zweite Tragprofil abgelegt, angedrückt und somit fixiert sowie dauerelastisch verklebt. Die Tragprofile sind werkseitig oder vor dem Vorgang des Einhängens und des Ablegens der flächigen Bauteile mit einem Distanzstreifen und einem Kleber versehen worden, sodass eine zügige Montage der flächigen Bauteile an der Fassade möglich ist.

Besonders vorteilhaft ist, dass eine hohe Effektivität beim Verlegen von Glaselementen mit der erfindungsgemäßen Befestigungsanordnung erreicht werden kann.

Die Klebeverbindungen ermöglichen eine hohe Langzeitstabilität ohne punktuelle Spannungen in den Materialien hervorzurufen.

Die sich ergebenden Flächen sind durch die Geschlossenheit ästhetisch ansprechend und es eröffnen sich vielseitige Verwendungsmöglichkeiten für die Befestigungsanordnung.

Somit ist auch eine einfache Herstellung von geschlossenen, dichten Flächen oder von Flächen mit offenen schmalen Fugen relativ einfach und kostengünstig möglich.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:

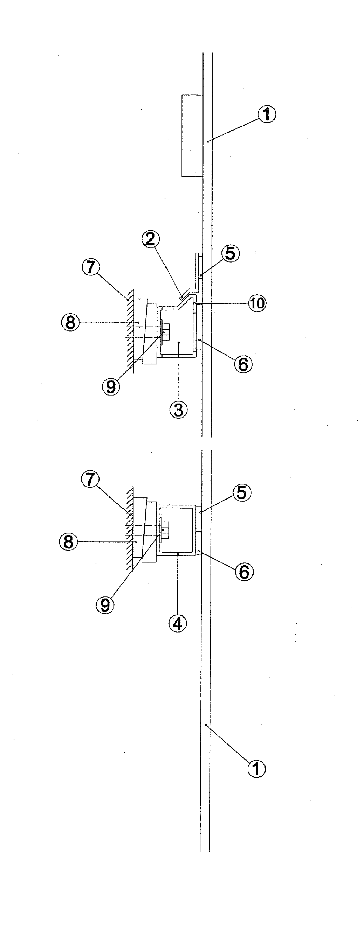

Fig. 1: Befestigungsanordnung für flächige Bauteile

In Figur 1 ist eine Befestigungsanordnung für flächige Bauteile 1, wie beispielsweise Solarglaselemente, dargestellt. Es versteht sich für den Fachmann von selbst, dass sich die Anwendung dieser Befestigungsanordnung nicht zwangsläufig auf Solarmodule beschränkt, da die Befestigungsanordnung und die damit verbundene Technologie der Befestigung von flächigen Bauteilen 1 generell für viele Einsatzfälle geeignet ist.

Am Solarmodul 1 ist eine Befestigungsschiene 2 mittels eines Klebstoffes 5 befestigt. Die Befestigung der Befestigungsschiene 2 am Solarmodul 1 kann bereits werkseitig bei der Produktion der Solarmodule 1 mit einem entsprechend sicheren und langzeitstabilen Klebstoff 5 erfolgen.

Die Befestigungsschiene 2 weist eine hakenartige Abkragung auf, die mit dem oberen Tragprofil 3 formschlüssig korrespondiert. Das obere Tragprofil 3 ist in der dargestellten Ausgestaltung als fünfeckiges Profil mit einer nach oben auskragenden Einhängewulst 10 ausgestaltet, in welche die Befestigungsschiene 2 mit ihrer hakenartigen Ausbildung eingehängt wird. Auf der dem Solarmodul 1 zugewandten Fläche des oberen Tragprofils 3 ist ein Distanzelement 6, auch als Distanzband bezeichnet, angebracht, welches bevorzugt aus mechanische Spannungen oder Druck absorbierendem Material ausgebildet ist.

Das obere Tragprofil 3 ist mittels einer Schraube 9 mit der Wand 7 verschraubt, bevor das Solarmodul 1 mit der Befestigungsschiene 2 in das obere Tragprofil eingehängt wird. Die Befestigung des oberen Tagprofils 3 mit der Wand 7 erfolgt nach einer besonders vorteilhaften Ausgestaltung über ein Justierelement 8, welches doppelt keilförmig ausgebildet und die horizontale Justierung des oberen Tragprofils 3 ermöglichend ausgeführt ist. Es ist besonders günstig, über die Schraube 9 in einem Arbeitsgang das obere Tragprofil 3 bei gleichzeitiger Justierung mittels Justierelementes 8 an der Wand 7 zu befestigen.

Das obere Tragprofil 3 sichert somit das Solarmodul 1 nach dem Einhängen zunächst in seiner Lage am Punkt des formschlüssigen Zusammenwirkens von Einhängewulst 10 und Befestigungsschiene 2.

Nachfolgend wird das Solarmodul 1 um die sich bildende Achse an das untere Tragprofil 4 herangeschwenkt und an diesem mittels Klebstoff 5 mit dem unteren Tragprofil 4 verklebt. Das Distanzelement 6 sichert dabei die minimale Klebstoffschichtdicke von zwei bis vier Millimetern, um einen dauerelastischen Dehnungsausgleich des Klebstoffes zu sichern.

Das untere Tragprofil 4 ist in analoger Weise wie das obere Tragprofil 3 mit der Wand 7 über ein Justierelement 8 und einer Schraube 9 befestigt. Die Klebeverbindung zwischen dem unteren Tragprofil 4 und dem Solarmodul 1 ist über einen langsam abbindenden Kleber ausgebildet, damit eine Nachjustierung in gewissen Größenordnungen möglich ist.

Als Klebstoff wird dabei bevorzugt Silikon eingesetzt, da die Flexibilität des Klebstoffes einen Dehnungsausgleich der Befestigung der Solarmodule 1 erlaubt.

Nach einer Weiterbildung der beschriebenen Ausgestaltung wird zusätzlich zur formschlüssigen Aufnahme der Befestigungsschiene 2 am oberen Tragprofil 3 eine Klebeverbindung mittels eines langsam abbinden Klebstoffes zwischen dem oberen Tragprofil 3 und dem Solarmodul 1 vorgesehen, um ein im Rahmen der Justierung entstandenes geringfügiges Spiel der formschlüssigen Verbindung auszugleichen.

### LISTE DER BEZUGSZEICHEN

- 1: flächiges Bauteil, Solar-Glaselement, Solarmodul
- 2: Befestigungsschiene
- 3: oberes Tragprofil
- 4: unteres Tragprofil
- 5: Klebstoff
- 6: Distanzelement, Distanzband
- 7: Wand
- 8: Justierelement
- 9: Befestigungsmittel, Schraube
- 10: Einhängewulst

## Patentansprüche

1. Befestigungsanordnung für flächige Bauteile (1), insbesondere für Glaselemente oder Solarmodule, an einer senkrechten oder geneigten Wand (7), einer Fassade oder einem Dach, **dadurch gekennzeichnet, dass** ein oberes Tragprofil (3) und ein unteres Tragprofil (4) in vertikaler Richtung zueinander beabstandet an einer Wand (7) befestigt angeordnet sind und dass eine Befestigungsschiene (2) an dem flächigen Bauteil (1) befestigt ist, wobei die Befestigungsschiene (2) in ein Tragprofil (3, 4) formschlüssig einhängbar und das flächige Bauteil (1) mit dem anderen Tragprofil (4, 3) stoffschlüssig verklebbar ausgebildet ist.

2. Befestigungsanordnung nach Anspruch 1, **dadurch gekennzeichnet, dass** die Befestigungsschiene (2) in das obere Tragprofil (3) eingehängt wird und der Klebstoff (5) auf dem unteren Tragprofil (4) angeordnet ist.

3. Befestigungsanordnung nach Anspruch 1 oder 2, **dadurch gekennzeichnet, dass** das obere und/oder das untere Tragprofil (3, 4) über ein Justierelement (8) in horizontaler Richtung an der Wand (7) positionierbar angeordnet sind.

4. Befestigungsanordnung nach einem der Ansprüche 1 bis 3, **dadurch gekennzeichnet, dass** das obere und/oder das untere Tragprofil (3, 4) an der Wand (7) mittels einer Schraube (9) über das Justierelement (8) befestig- und positionierbar angeordnet ist.

5. Befestigungsanordnung nach einem der Ansprüche 1 bis 4, **dadurch gekennzeichnet, dass** das Tragprofil (3, 4) zur formschlüssigen Aufnahme der Befestigungsschiene (2) einen fünfeckigen Querschnitt mit nach oben auskragender Einhängewulst (10) aufweist.

6. Befestigungsanordnung nach einem der Ansprüche 1 bis 5, **dadurch gekennzeichnet, dass** das Tragprofil (3, 4) zur stoffschlüssigen Verbindung mit dem flächigen Bauteil (1) einen viereckigen Querschnitt aufweist.

7. Befestigungsanordnung nach einem der Ansprüche 1 bis 6, **dadurch gekennzeichnet, dass** an den Tragprofilen (3, 4) Distanzelemente (6) zur Positionierung der flächigen Bauteile (1) und zur Ausbildung der minimalen Dicke einer Klebstoffschicht vorgesehen sind.

8. Befestigungsanordnung nach einem der Ansprüche 1 bis 7, **dadurch gekennzeichnet, dass** das untere Tragprofil (4) mit langsam bindendem Kleber zur stoffschlüssigen Verbindung mit dem flächigen Bauteil (1) beschichtet ist.

9. Befestigungsanordnung nach einem der Ansprüche 1 bis 8, **dadurch gekennzeichnet, dass** die Befestigungsschiene (2) am flächigen Bauteil (1) angeklebt ist.

10. Befestigungsanordnung nach einem der Ansprüche 1 bis 9, **dadurch gekennzeichnet, dass** die Befestigungsschiene (2) kürzer als die Breite des flächigen Bauteils (1) ausgeführt ist.

11. Befestigungsanordnung nach einem der Ansprüche 1 bis 10, **dadurch gekennzeichnet, dass** das obere und/oder das untere Tragprofil (3, 4) horizontal an der Wand (7) befestigt und mit Durchbrüchen für die Ableitung von Regenwasser ausgebildet ist.
